# EUROPEAN PATENT APPLICATION

(11) **EP 3 086 268 A1**
(43) Date of publication of application: **26.10.2016**
(21) Application number: 16166611.0
(22) Date of filing: 22.04.2016
(51) Int. Cl.: G06Q 10/08, G06Q 50/30

(54) **RESOURCE OPERATION PLANNING ASSIST APPARATUS AND RESOURCE OPERATION PLANNING ASSIST METHOD**

(30) Priority: 24.04.2015 JP 2015089771
(71) Applicant: Hitachi, Ltd., Tokyo 100-8280 (JP)
(72) Inventor: MAEKAWA, Yuki, Chiyoda-ku, Tokyo 100-8280 (JP); IWAMURA, Shigeki, Chiyoda-ku, Tokyo 100-8280 (JP); TOMIYAMA, Tomoe, Chiyoda-ku, Tokyo 100-8280 (JP); SATOU, Tatsuhiro, Chiyoda-ku, Tokyo 100-8280 (JP)
(74) Representative: Moore, Graeme Patrick

(57) **Abstract**

In an event of a change in a plan, re-creation of the feasible plan is assisted while avoiding a conflict with another cooperating plan. A resource operation planning assist apparatus includes: a storage device that stores cooperation definition information defining cooperation conditions between plans sharing a resource used to implement the plans, and plan information indicating details of the plans; and a CPU that checks information about resources and tasks indicated by the plan information of a given plan requiring a change and another plan with the cooperation conditions defined in the cooperation definition information, specifies, as cooperating tasks, paired tasks in the given and other plans meeting the cooperation conditions, and, upon receipt of an instruction to change the given plan, re-creates the given plan by applying, as restriction information, information about an alternative resource or task specified by a user from the specified resource or task candidates.

## Description

### BACKGROUND OF THE INVENTION

### 1. Field of the Invention

The present invention relates to a resource operation planning assist apparatus and a resource operation planning assist method. Specifically, the present invention relates to a technique for making it possible to assist in re-creating a feasible given plan while avoiding a conflict with another cooperating plan in response to an event of a change in the given plan.

### 2. Related Art

In the fields of transport service business, manufacturing, and the like, which require a number of resources such as numerous transportation machineries and various devices, not only a daily operation plan about such transportation machineries and the like but also operation plans for the resources to maintain the quality and safety of services and products are created and managed.

In the field of railway service, for example, together with a daily train service plan, a maintenance plan corresponding to regular checkup of cars included in a train and a yard shunting plan for movement of the cars in a rail yard are created. In such a situation where there are a plurality of plans, when disruption occurs to train services, the train service plan is promptly changed to return the train schedule back to its normal state, i.e., to perform so-called "service reordering", and also to change a car composition of each train according to the change in the service plan, i.e., to perform so-called "operation reordering".

In this "operation reordering", it is required to minimize the influence on the maintenance plan and the yard shunting plan. However, these plans are in a relationship where they affect each other with common resources as the origin. Therefore, in a situation where there is need for particularly an immediate plan change such as the schedule recovery described above, it is very difficult to manually perform adequate coordination work between the plans.

Therefore, in order to make improvement against such a situation, various measures have been taken for the resource operation plan. For example, there has been proposed a car operation reordering plan creation apparatus (see Japanese Patent Application Laid-open Publication No. 2010-58771) and the like for creating a car operation reordering plan for a target train schedule in a given reordering target period in a predetermined train schedule. The car operation reordering plan creation apparatus includes: a basic network generation unit configured to calculate, based on the target schedule, a start node indicating a starting station of each train in the reordering target period, an end node indicating a terminal station at which any of the trains terminates its service in the reordering target period, a train node indicating each train in the reordering target period, and an inspection node indicating train inspection at a terminal station of each train, the terminal station being a station at which the car inspection can be performed, and to generate an operation reordering basic network by connecting some of the calculated nodes which can be coupled to each other with arcs based on the target schedule; a duplicate number determination unit configured to determine the number of duplicates of the operation reordering basic network based on the total number N of predetermined nodes included in the operation reordering basic network; an expanded network generation unit configured to generate an expanded network by generating the duplicate number of duplicate networks by duplicating the operation reordering basic network, and combining the generated duplicate networks with the operation reordering basic network; an arc change unit configured to, for each of the inspection nodes included in the expanded network, change an ending node of an arc starting from the inspection node to the corresponding ending node in the duplicate network corresponding to the number n (≤N) of the predetermined nodes that meets an inspection deadline condition by inspection of the inspection node; a route search unit configured to search as a car operation route candidate for an arc route between the starting node of the operation reordering basic network to any of the ending nodes of the expanded network; and an operation reordering plan creation unit configured to create an operation reordering plan by combining the car operation route candidates searched-out by the route search unit.

Moreover, there has also been proposed a resource operation plan creation apparatus (see Japanese Patent Application Laid-open Publication No. 2012-168739) and the like for creating an operation plan for transportation resources. The resource operation plan creation apparatus includes: an input unit through which a computer reads operation schedule information of a transportation service; a network model creation unit configured to create nodes based on the operation schedule for each of transportation routes included in the operation schedule, the nodes having at least a starting location, a starting time, an arrival location and an arrival time of a transportation route as attributes, to create a path based on the attributes of the nodes by coupling the nodes indicating each transportation route capable of continuous operation using the same transportation resource, and to create a network model of transportation routes; and a plan creation unit configured to create the operation plan based on the network model. The network model creation unit acquires information about backup resources, creates a backup resource node having at least a storage location and an available time slot of the backup resources as attributes, and adds the created backup resource node to the network model. Also, the network model creation unit adds a path to the network model, the path in which the backup resource node is coupled to a node indicating an operation route capable of operation using the backup resources, based on the attributes of the backup resource node and the attributes of other nodes included in the network model. The plan creation unit extracts, from the network model, a path combination including two or more paths such that one transportation resource or backup resource is allocated to each of the nodes other than the backup resource node included in the network model. Then, the plan creation unit creates an operation plan of the transportation resource and the backup resource by allocating the transportation resource or backup resource to each of the paths included in the extracted combination, and outputs the operation plan.

### SUMMARY OF THE INVENTION

With the conventional technique, it is possible to reconsider another plan based on a fixed plan by performing re-creation of a resource operation plan or the like according to a basic yard shunting plan. However, in changing the resource operation plan in response to, for example, the occurrence of an abrupt event or the like, it is not possible to consider a feasible resource operation with taken into account a constraint relationship or the like with the other plans influenced by such change. That is to say, in a situation where there are plans affecting each other in resource operation, the conventional technique is not capable of assisting in resource operation planning with feasibility taken in to consideration in view of the influence of a change in a certain plan and existing constraints.

Therefore, it is an object of the present invention to provide a technique for making it possible to assist in re-creating a feasible given plan while avoiding a conflict with another cooperating plan in response to an event of a change in the given plan.

To solve the foregoing problems, a resource operation planning assist apparatus of a first aspect of the invention includes: a storage device configured to store cooperation definition information defining a cooperation condition between plans sharing a resource used to implement the plans and plan information indicating details of the respective plans; and an arithmetic device configured to execute processing of reading the plan information of a given one of the plans requiring a predetermined change among the plans and the plan information of another one of the plans other than the given plan, from the storage device, checking information about a resource and each task thereof used in each of the plans indicated by the plan information with the cooperation condition defined in the cooperation definition information, and specifying a pair of tasks in the given plan and the other plan, which meet the cooperation condition, as cooperating tasks, and processing of, upon receipt of an instruction to change a certain task or a certain resource in the given plan through an input device, specifying each alternative resource candidate which is allocable to the certain task instead of the current resource or an alternative task candidate to which the certain resource is allocable instead of the current task, by using a predetermined algorithm based on the plan information, the cooperation definition information, and respective information of the cooperating tasks, receiving information about an alternative resource or an alternative task specified by a user from the alternative resource candidates or the alternative task candidates, as restriction information, through the input device, re-creating the given plan by using a predetermined algorithm under a condition that the restriction information is applied to the plan information of the given plan, and outputting the re-created given plan to a predetermined apparatus.

Then, in another aspect of the invention, a resource operation planning assist method is one to be implemented by an information processor including a storage device configured to store cooperation definition information defining a cooperation condition between plans sharing a resource used to implement the plans and plan information indicating details of the respective plans. In method, the information processor executes: processing of reading the plan information of a given one of the plans requiring a predetermined change among the plans and the plan information of another one of the plans other than the given plan, from the storage device, checking information about a resource and each task thereof used in each of the plans indicated by the plan information with the cooperation condition defined in the cooperation definition information, and specifying a pair of tasks in the given plan and the other plan, which meet the cooperation condition, as cooperating tasks, and processing of, upon receipt of an instruction to change a certain task or a certain resource in the given plan through an input device, specifying each alternative resource candidate which is allocable to the certain task instead of the current resource or an alternative task candidate to which the certain resource is allocable instead of the current task, by using a predetermined algorithm based on the plan information, the cooperation definition information, and respective information of the cooperating tasks, receiving information about an alternative resource or an alternative task specified by a user from the alternative resource candidates or the alternative task candidates, as restriction information, through the input device, re-creating the given plan by using a predetermined algorithm under a condition that the restriction information is applied to the plan information of the given plan, and outputting the re-created given plan to a predetermined apparatus.

The present invention makes it possible to, in response to an event of a change in a given plan, re-create the feasible given plan while avoiding a conflict with another cooperating plan.

### BRIEF DESCRIPTION OF THE DRAWINGS

Fig. 1 is a diagram showing a hardware configuration example of a resource operation planning assist apparatus according to an embodiment;
Fig. 2 is a diagram showing an example of a train service plan according to the embodiment;
Fig. 3 is a diagram showing an example of a car operation plan according to the embodiment;
Fig. 4 is a diagram showing Example 1 of a yard shunting plan according to the embodiment;
Fig. 5 is a diagram showing Example 2 of the yard shunting plan according to the embodiment;
Fig. 6 is a diagram showing a configuration example of cooperation definition information according to the embodiment;
Fig. 7 is a diagram showing a configuration example of task connection information according to the embodiment;
Fig. 8 is a diagram showing a configuration example of inter-plan environment information according to the embodiment;
Fig. 9 is a diagram showing a configuration example of output cooperation task information according to the embodiment;
Fig. 10 is a diagram showing a configuration example of restriction information according to the embodiment;
Fig. 11 is a diagram showing a basic flow of a resource operation planning assist method according to the embodiment;
Fig. 12 is a flowchart showing Procedure Example 1 of the resource operation planning assist method according to the embodiment;
Fig. 13 is a flowchart showing Procedure Example 2 of the resource operation planning assist method according to the embodiment;
Fig. 14 is a diagram showing Screen Example 1 according to the embodiment;
Fig. 15 is a diagram showing Screen Example 2 according to the embodiment;
Fig. 16 is a diagram showing Screen Example 3 according to the embodiment; and
Fig. 17 is a diagram showing Screen Example 4 according to the embodiment.

### DETAILED DESCRIPTION OF THE INVENTION

### Apparatus Configuration

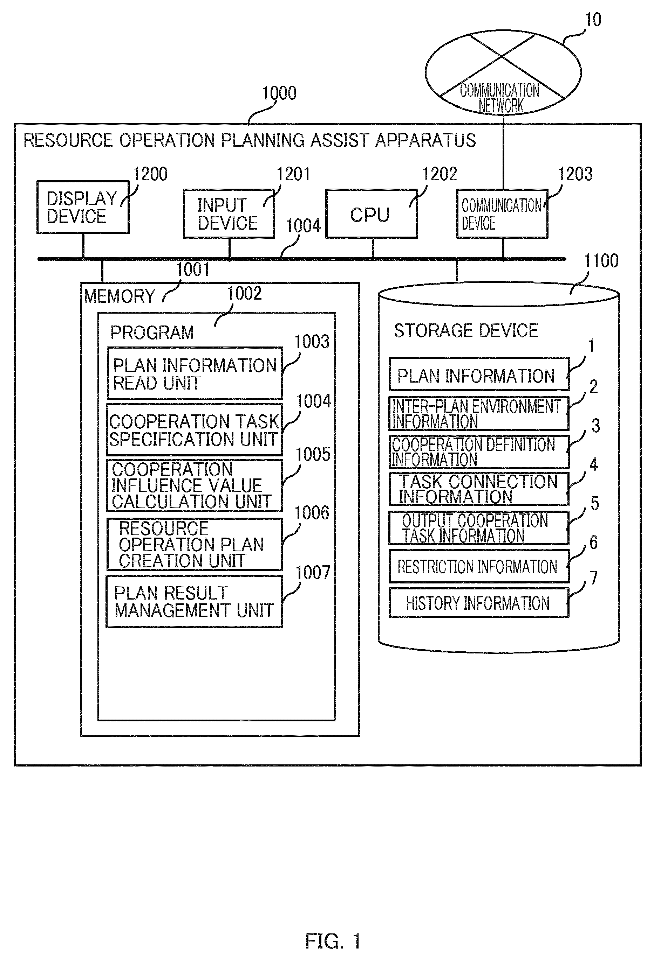

Hereinafter, detailed description is given of an embodiment of the present invention by use of the accompanying drawings. Fig. 1 is a network configuration diagram including a resource operation planning assist apparatus 1000 according to this embodiment. The resource operation planning assist apparatus 1000 shown in Fig. 1 is a computer apparatus capable of assisting in re-creation of a feasible given plan while avoiding a conflict with another cooperating plan in response to an event of a change in the given plan. As the field of plans to be processed by the resource operation planning assist apparatus 1000 according to this embodiment, a car operation plan (integrally corresponding to a train service plan) of a railway service provider and a yard shunting plan for cars included in a train are assumed.

However, the application field of this embodiment is not limited to the transportation business such as the railway service. The present invention is applicable to any field that requires operation plans by allocating a number of resources to respective tasks, such as a manufacturing field where manufacturing apparatuses are allocated to respective manufacturing tasks and products corresponding to the quantity ordered are shipped in a predetermined period as the entire plant, for example.

The resource operation planning assist apparatus 1000 shown in Fig. 1 is configured as the same information processor as a general server apparatus or the like. Therefore, a hardware configuration thereof is as follows. The resource operation planning assist apparatus 1000 includes: a storage device 1100 including an appropriate non-volatile storage element such as an SSD (Solid State Drive) and a hard disk drive; a memory 1001 including a volatile storage element such as a RAM; a CPU 1202 (arithmetic device) configured to perform integrated control of the apparatus itself by reading a program 1002 into the memory 1001 from the storage device 1100 and executing the program 1002, and to perform various determination, arithmetic and control processing; an input device 1201 configured to receive a key input and a voice input from a user; a display device 1200 such as a display configured to display processing data; and a communication device 1203 coupled to an appropriate communication network 10 and configured to perform communication processing with a management apparatus or the like for another plan. Also, the respective components described above are coupled to each other through a bus 1004.

Note that the storage device 1100 stores, as information required for the resource operation planning assist apparatus according to this embodiment, at least plan information 1 as contents of resource operation plans such as the car operation plan described above, inter-plan environment information 2, cooperation definition information 3, task connection information 4, output cooperation task information 5, restriction information 6, and history information 7. Specific configurations of the respective pieces of information 1 to 7 are described later.

Moreover, functions implemented by the program 1002 read into the memory 1001 include a plan information read unit 1003, a cooperation task specification unit 1004, a cooperation influence value calculation unit 1005, a resource operation plan creation unit 1006, and a plan result management unit 1007. These functions are also described in detail later.

### Function Example

Subsequently, description is given of the functions included in the resource operation planning assist apparatus 1000 according to this embodiment. As described above, the functions described below can be said to be functions implemented by the resource operation planning assist apparatus 1000 executing the program 1002, for example.

The plan information read unit 1003 in the resource operation planning assist apparatus 1000 is the function to acquire plan information 1 about the car operation plan and the train service plan stored in the storage device 1100 as well as plan information 1 about another plan from another apparatus through the communication device 1203, and to store the acquired information in the storage device 1100. The other apparatus in this case is a management apparatus for a yard shunting plan on the communication network 10. Thus, in the case of this embodiment, the other plan corresponds to the yard shunting plan for the cars.

The cooperation task specification unit 1004 in the resource operation planning assist apparatus 1000 is the function to extract task information allocated to a resource shared by the given plan and the other plan from the respective pieces of plan information 1 about the given and other plans acquired by the plan information read unit 1003, based on the inter-plan environment information 2 (to be described later) and the cooperation definition information 3 stored in the storage device 1100, and to store the task information in the task connection information 4 in the storage device 1100 while associating cooperation tasks with each other between tasks in the given plan and tasks in the other plan. The processing by the cooperation task specification unit 1004 is described in detail later.

The cooperation influence value calculation unit 1005 in the resource operation planning assist apparatus 1000 is the function to calculate an influence value of a change in an allocation situation based on the inter-plan environment information 2 held in the storage device 1100, such as a case where the resources to be allocated to the tasks of the given plan or the other plan are changed according to an instruction of the user who desires to fix a train service delay due to car trouble, for example, for the resources allocated to the tasks specified in the task connection information 4 described above.

The resource operation plan creation unit 1006 in the resource operation planning assist apparatus 1000 is the function to specify, using a predetermined algorithm, each alternative resource candidate which can be allocated to a predetermined task instead of the current resource in the given plan or each alternative task candidate to which a predetermined resource can be allocated instead of the current task, based on the respective information including the plan information 1, the inter-plan environment information 2, the cooperation definition information 3, and the task connection information 4 (cooperation task information), to display the specified alternative resource candidate or alternative task candidate on the display device 1200, to acquire, as the restriction information 6, information about an alternative resource or task specified by the user upon specification thereof by the user, and to re-create the given plan by using a predetermined algorithm under the condition that the restriction information 6 is applied to the plan information 1 of the given plan. Also, the resource operation plan creation unit 1006 presents the generated given plan, i.e., car operation plan (resource operation plan) and train service plan to the user through the display device 1200.

The plan result management unit 1007 in the resource operation planning assist apparatus 1000 is the function to add information indicating a change in an initial plan of the given plan re-created by the resource operation plan creation unit 1006 described above, to the history information 7 in the storage device 1100, and to execute backup processing of the given plan before the individual correction of a change in plan and the plan re-creation in response to an input by the user. However, this function is not essential.

### Data Structure Example

Next, description is given of specific examples of the information 1 to 7 to be used by the resource operation planning assist apparatus 1000 according to this embodiment. Among them, the plan information 1 is information indicating a car operation plan (current resource operation plan) defining information about resources such as the cars described above, i.e., resource information and information about tasks to which the resources are allocated, such as a train to which appropriately organized cars are allocated, i.e., task information.

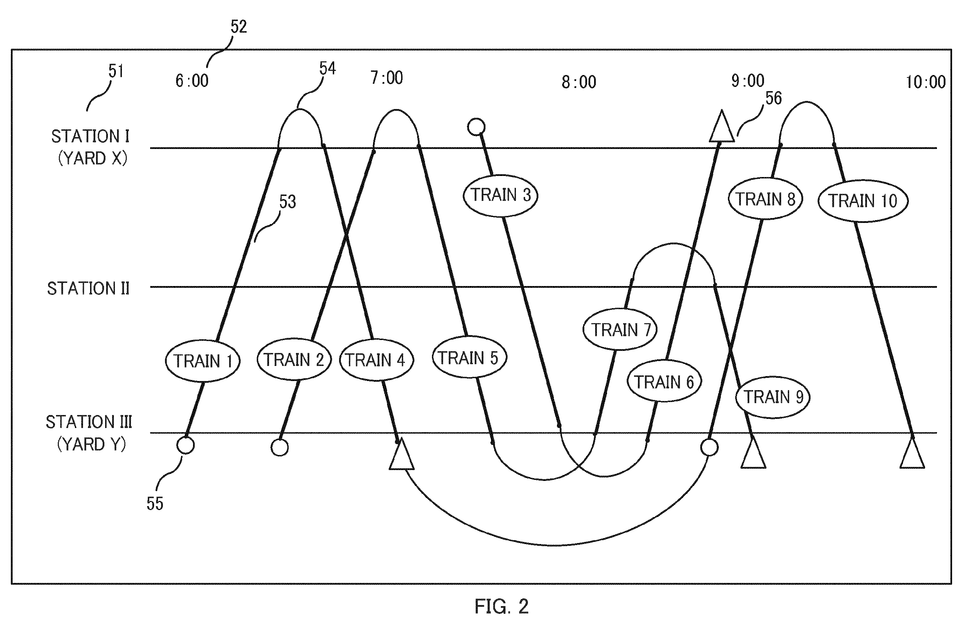

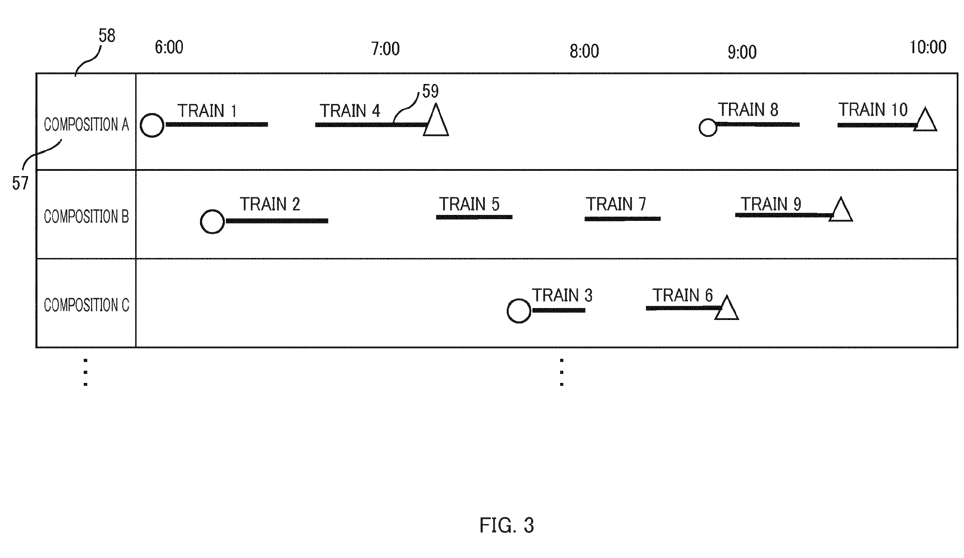

Figs. 2 and 3 show specific examples of the car operation plan and a train service plan corresponding to the car operation plan, which are the plan information 1 described above. Fig. 2 is a diagram showing an example of the train service plan according to this embodiment. In this train service plan, a vertical axis 51 is an axis representing a positional relationship between a station and a rail yard adjacent to the station, and a horizontal axis 52 is an axis representing time.

In such a region, one train is expressed by drawing a line (hereinafter referred to as a train line) in accordance with the time from a starting station to a terminal station of the train. For example, a heavy line 53 represents "train 1" that is a train which leaves "station III" around 6:00 and arrives at "station I" around 6:30. Also, a line segment connecting two train lines, such as a line segment 54, represents a train group allocated to one composition. For example, in the example of Fig. 2, "train 1", "train 4", and "train 8" are connected as one train group, meaning that one composition runs in this order.

Moreover, a symbol indicated by "○" such as a symbol 55 represents a timing for taking the composition out of the rail yard. For example, the symbol 55 represents taking the composition out of "rail yard Y" adjacent to "station III" upon departure of "train 1". Also, a symbol indicated by "Δ" such as a symbol 56 represents a timing for housing the composition in the rail yard. For example, the symbol 56 represents housing the composition allocated to "train 6" in "rail yard X" adjacent to "station I" after arrival of "train 6" at "station I".

Fig. 3 shows an example of a car operation plan according to this embodiment. The car operation plan indicates allocation to a "train" that is a task in the train service plan shown in Fig. 2, for each composition that is the assembly of the cars. In the car operation plan shown in Fig. 3, a composition name 58 is a name for uniquely identifying a composition. Also, a line segment 59 indicates allocation of a train to the composition represented by the composition name 58 described above. Each of the trains allocated to each composition is represented by one crossbar, and a train name is represented around the crossbar. Moreover, "Δ" is a symbol representing storage in the rail yard.

In the plan information 1 about the car operation plan as described above, the composition and the cars correspond to resources. The composition means an assembly of a plurality of cars allocated to a train. Also, the train corresponds to a task that is a minimum unit of transportation service. The task in this case is defined by stations at which the train stops or through which the train passes between the starting station and the terminal station, and the time of arrival, departure or passage at each of the stations. The car operation plan defines a plan for allocation of the cars as resources to the train as the task.

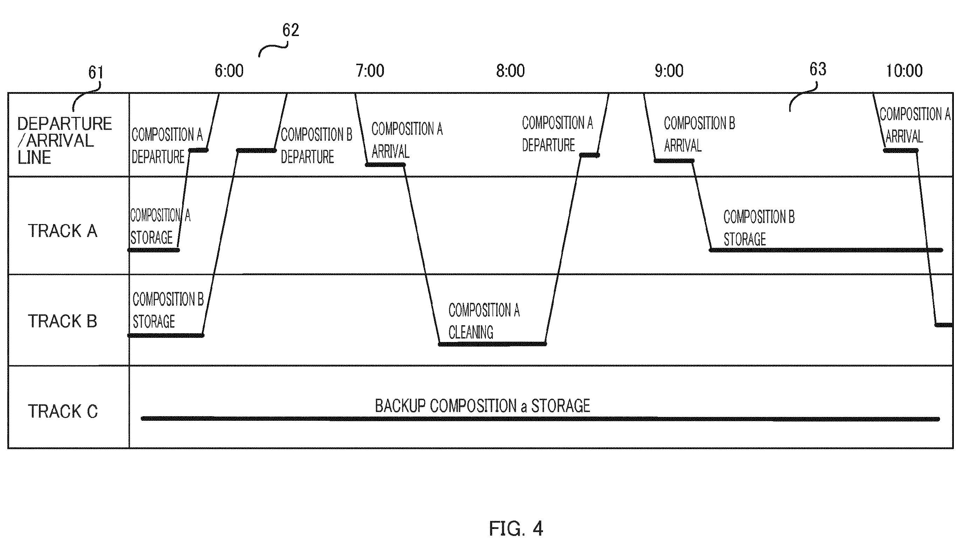

Fig. 4 shows an example of a yard shunting plan that is another plan according to this embodiment. The yard shunting plan described as an example here is a yard shunting plan for "rail yard Y". The yard shunting plan is a plan for the rail yard to perform car maintenance management such as storage, cleaning and inspection of the cars. To be more specific, the yard shunting plan is a plan for setting which storage tracks (hereinafter called tracks) laid in the rail yard are allocated to various operations (tasks) for storing the composition corresponding to the resources.

The diagram representing such a plan includes a track name 61, a horizontal axis 62, and an allocation plan 63 in the yard shunting plan shown in Fig. 4. Among them, the track name 61 represents names for uniquely identifying the tracks. Also, the horizontal axis 62 represents time. Moreover, the allocation plan 63 represents allocation of storage operations to the respective tracks represented in the track name 61. Each of the storage operations to be allocated is indicated by one crossbar, and movement between the tracks is indicated by an oblique line.

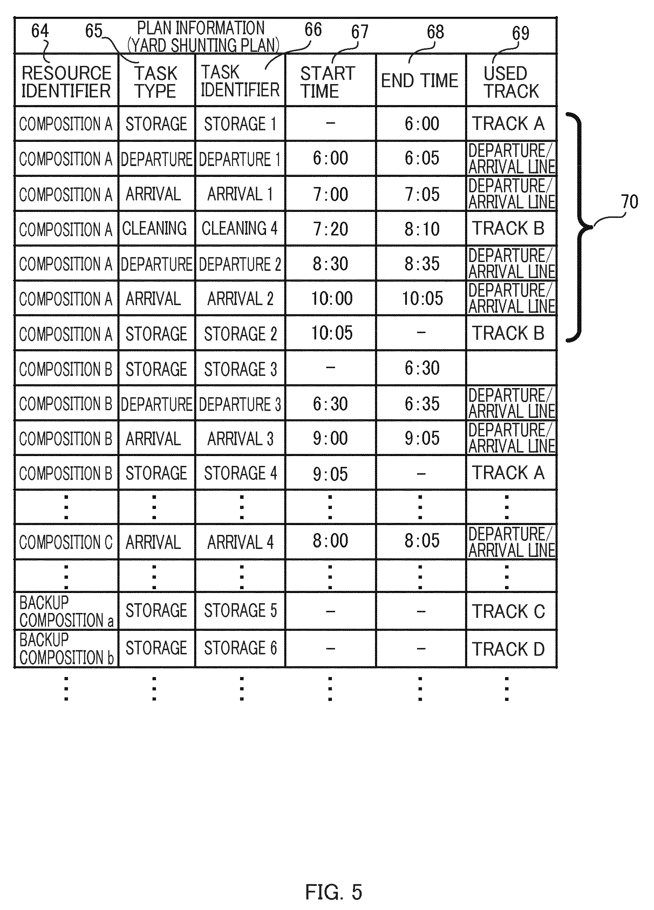

Fig. 5 shows a record configuration example of the yard shunting plan shown in Fig. 4 described above. The plan information 1 that is the contents of the yard shunting plan described above actually has a table structure as shown in Fig. 5. The yard shunting plan shown in the table format includes records including respective values of resource identifier 64, task type 65, task identifier 66, start time 67, end time 68, and used track 69.

Among the above, the resource identifier 64 represents resource names for uniquely identifying the compositions as the resources to be planned. The task type 65 represents types of operations (tasks), such as inspection and cleaning, allocated to the resources represented by the resource identifier 64 described above.

The task identifier 66 represents names for uniquely identifying the operations (tasks), such as inspection and cleaning, allocated to the resources represented by the resource identifier 74. The start time 67 represents start times of the tasks represented by the task identifier 66, while the end time 68 represents end times of the tasks represented by the task identifier 66. Meanwhile, the used track 69 represents names of the tracks used by the tasks represented by the task identifier 66.

Here, description is given of an example of operation schedule information about the composition based on the train service plan, car operation plan, and yard shunting plan described above to be processed by the resource operation planning assist apparatus 1000 according to this embodiment. For example, a record 57 (plan for composition A) in the car operation plan in Fig. 3 and a record group 70 (plan for composition A) in the yard shunting plan in Fig. 5 are taken as an example.

The record 57 represents an operation schedule allocated to "composition A". This "composition A" is stored until "6:00" on "track A", leaves a departure/arrival line in the rail yard Y at "6:05", and runs between "station III" and "station I" as "train 1". Then, "composition A" turns back at "station I", runs as "train 4", and then is temporarily stored (arrival) at "7:05" in the departure/arrival line in the rail yard Y of "station III". Thereafter, "composition A" is scheduled to be cleaned on "track B" from "7:20" to "8:10" and taken out (departure) of the rail yard Y again at "8: 35" to run as "train 8". Thus, the respective plans described above cooperate with each other so as to execute tasks without any trouble in the respective plans while sharing the composition (assembly of the cars) as the resources. However, there is a case where an event such as a train delay occurs in a certain plan due to various causes such as trouble with the cars or traffic light and an abrupt change in the weather. In such a case, plan modification is required to solve the delay in response to the event. Therefore, the user such as a manager of the plan instructs the resource operation planning assist apparatus 1000 to change the composition allocated to the train that is the task from the current composition to another composition. The resource operation planning assist apparatus 1000 according to this embodiment is an apparatus configured to assist in re-creating the resource operation plan in response to such an instruction.

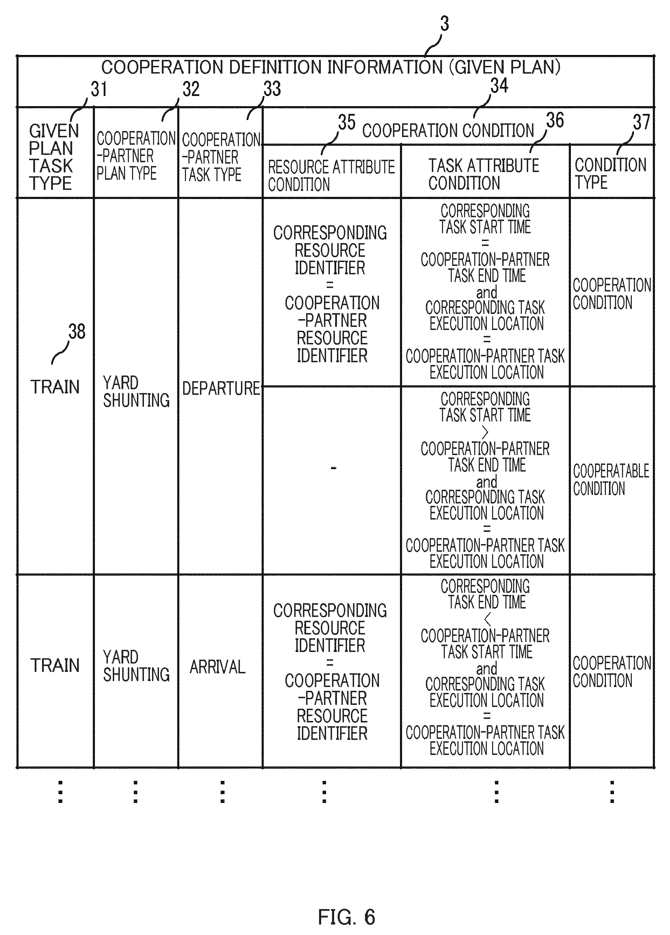

Subsequently, with reference to Fig. 6, the cooperation definition information 3 according to this embodiment is described. The cooperation definition information 3 shown in Fig. 6 is information defining conditions (cooperation task conditions) of tasks capable of cooperation between an given plan and another plan cooperating therewith when the car operation plan (Fig. 3) is the given plan and the yard shunting plan (Figs. 4 and 5) is the other plan. The cooperation definition information 3 is previously defined by the user with knowledge such as the plan manager and stored in the storage device 1100.

Each of records in the cooperation definition information 3 described above has a configuration in which respective values of given plan task type 31, cooperation-partner plan type 32, cooperation-partner task type 33, and cooperation condition 34 are associated with each other. One record in the cooperation definition information 3 defines one cooperation task condition.

The value of the given plan task type 31 in the record of the cooperation definition information 3 represents the type of a task to which a resource is to be allocated in a plan to be processed by the resource operation planning assist apparatus 1000, i.e., the given plan. In the case of this embodiment, the "train" is set, which is the task in the car operation plan.

The value of the cooperation-partner plan type 32 represents the type of the other plan cooperating with the given plan described above. In the case of this embodiment, the "yard shunting plan" is set as a cooperation-partner plan.

The value of the cooperation-partner task type 33 represents the type of a task to which a resource is to be allocated in the other plan represented by the cooperation plan type 32 described above. In the case of this embodiment, "departure" and "arrival" are set as tasks at the cooperation partner.

The cooperation condition 34 includes respective values of resource attribute condition 35, task attribute condition 36, and condition type 37. Among these values, the value of the resource attribute condition 35 predetermines cooperation conditions for the attributes of the resources allocated to the tasks cooperating in both of the given and other plans (i.e., the given plan task type 31 and the cooperation-partner task type 33). In the example of Fig. 6, coincidence of resource attribute information used in the tasks cooperating between the given plan and the other plan is specified as the cooperation condition.

The value of the task attribute condition 36 specifies cooperation conditions for the attribute information of the tasks cooperating in both the given and other plans described above. In the example of Fig. 6, no occurrence of reversal of the chronological order of the tasks cooperating in both the given and other plans, and the like are specified as the cooperation conditions.

The value of the condition type 37 represents whether the respective conditions represented by the resource attribute condition 35 and the task attribute condition 36 described above are essential conditions for connecting the two tasks (the given plan task type 31 and the cooperation-partner task type 33) in the given and other plans or conditions allowing the connection. In the example of Fig. 6, the value of "cooperation condition" is set when the conditions are the essential conditions, and the value of "cooperatable condition" is set when the conditions are the conditions allowing the connection. Note that, in a record having the value of "cooperation condition" set therein, a condition that the same resources are shared between the two tasks in the given and other plans is set as the value of the resource attribute condition 35.

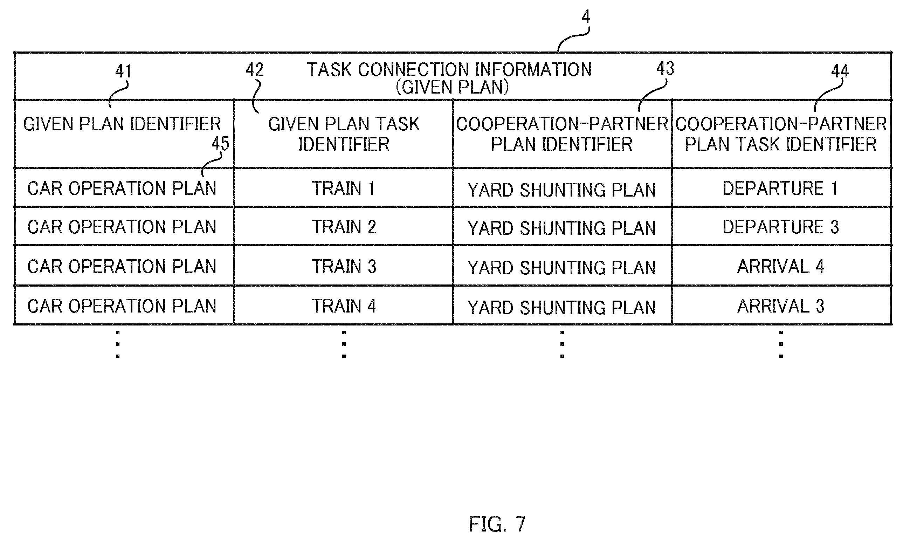

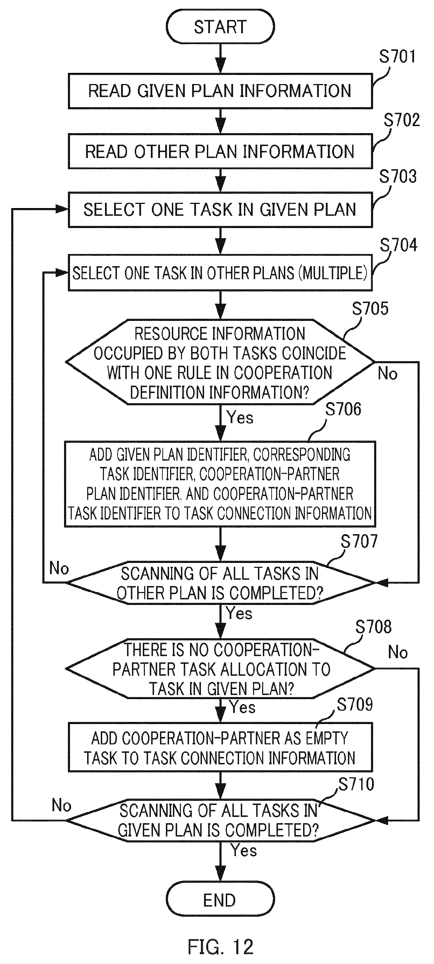

Subsequently, with reference to Fig. 7, the task connection information 4 according to this embodiment is described. The task connection information 4 is obtained by the resource operation planning assist apparatus 1000 reading the respective plan information 1 of the car operation plan (Fig. 3) that is the given plan and the yard shunting plan (Figs. 4 and 5) that is the other plan from the storage device 1100, checking the respective information about the resources used in the respective plans represented by the respective plan information 1 and the tasks thereof against the cooperation conditions specified in the cooperation definition information 3 described above, and specifying and storing pairs of tasks in the given and other plans that meet the cooperation conditions as cooperation tasks. The processing for specifying the cooperation tasks is described later based on a flow shown in Fig. 12.

Each of records in the task connection information 4 shown in Fig. 7 has a configuration in which respective values of given plan identifier 41, given plan task identifier 42, cooperation-partner plan identifier 43, and cooperation-partner task identifier 44 are associated with each other. One record thus configured defines one task cooperating between the given and other plans, i.e., one piece of cooperation task information.

As the value of the given plan identifier 41 in the record described above, the value of the "car operation plan" that is the given plan described above is set. The value of the given plan task identifier 42 represents task names for uniquely identifying tasks to which the resources are to be allocated in the "car operation plan" that is the given plan. In the example of Fig. 7, respective values of the "train" that is the task in the "car operation plan" are set.

The value of the cooperation-partner plan identifier 43 is identification information for specifying the other plan cooperating with the "car operation plan" that is the given plan described above. In the example of Fig. 7, the value of the "yard shunting plan" that is the other plan cooperating with the "car operation plan" is set.

The value of the cooperation-partner task identifier 44 represents task names for uniquely identifying tasks cooperating with the given plan task identifier 42 among the tasks to which the resources are to be allocated in the plan represented by the cooperation plan identifier 43. In the example of Fig. 7, respective values of "departure" and "arrival" are set as tasks cooperating with the "train" in the given plan task identifier 42 among the tasks to which the resources are to be allocated in the "yard shunting plan".

Here, taking a record 45 in the task connection information 4 described above as an example, the contents of the task connection information 4 are described. The record 45 represents a situation where the task "departure 1" in the "yard shunting plan" that is the cooperation-partner plan is connected to the task "train 1" in the "car operation plan". In this case, "train 1" and "departure 1" correspond to the cooperation tasks. Moreover, "train 1" and "departure 1" are a task pair that meets rules of a record 38 held in the cooperation definition information 3 shown in Fig. 6 (rules when the given plan task is "train" and the cooperation-partner task is "departure"). Note that information of the respective tasks and resources can be acquired by referring to the plan information 1 based on the task identifiers "train 1" and "departure 1" here.

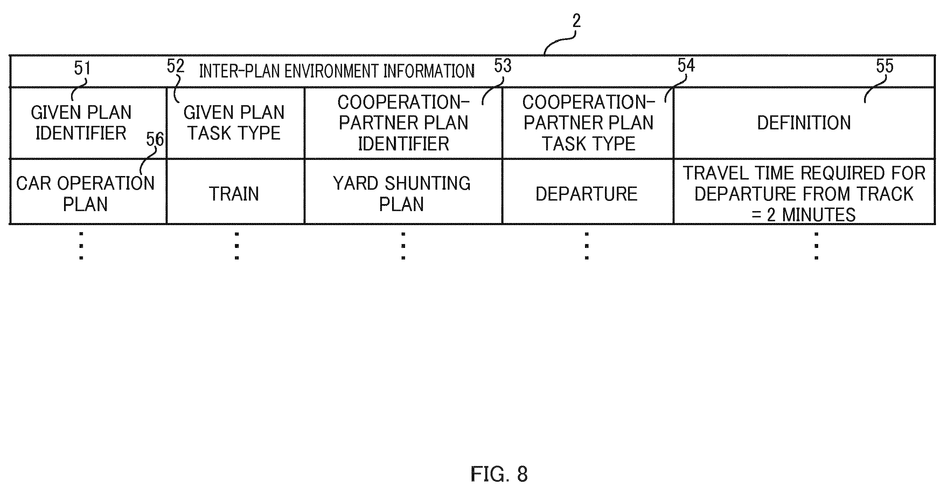

Subsequently, with reference to Fig. 8, the inter-plan environment information 2 according to this embodiment is described. The inter-plan environment information 2 is information defining relationships between the resources and tasks shared in the given and other plans cooperating with each other, for each other plan cooperating with the given plan described above. The relationships defined by the inter-plan environment information 2 represent the attribute information of the resources and tasks by using arithmetic operators, logical operators, relational operators, and the like, respectively. In the example of this embodiment, the inter-plan environment information 2 has a configuration in which respective values of given plan identifier 51, given plan task type 52, cooperation-partner plan identifier 53, cooperation-partner type 54, and definition 55 are associated with each other. One record thus configured defines one piece of environment information to be considered about a task cooperating between the given and other plans, i.e., a cooperation task.

For example, when a composition to be allocated as a certain train (task in the given plan) is in storage (task in the other plan) on a predetermined track in a certain rail yard, between the yard shunting plan in the rail yard and the car operation plan described above, it takes a certain amount of travel time to leave as a train from the track through a departure/arrival line. As represented in a record 56 shown in Fig. 8, for example, this relationship can be set in the definition 55 that "travel time to leave from the track through the departure/arrival line is 2 minutes" for a certain composition shared between a task whose task type in the car operation plan is "train" and a task whose task type in the yard shunting plan is "departure". Such inter-plan environment information 2 is previously defined by the user with knowledge such as the plan manager or the like and stored in the storage device 1100.

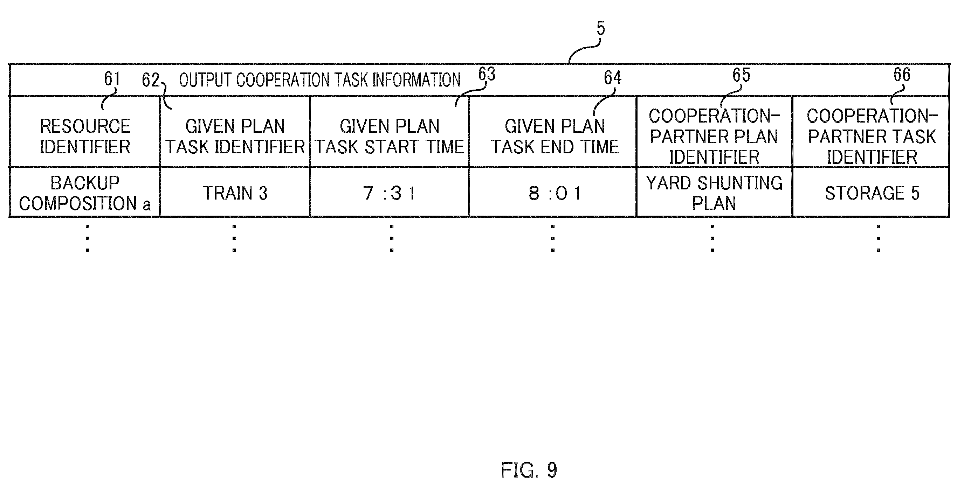

Next, with reference to Fig. 9, the output cooperation task information 5 according to this embodiment is described. The output cooperation task information 5 according to this embodiment includes information of tasks affected by a change in the task start time or the like as a result of the re-creation of the resource operation plan by the resource operation planning assist apparatus 1000, among the cooperation tasks held in the task connection information 4 described above.

Each of records in the output cooperation task information 5 has a configuration in which respective values of resource identifier 61, given plan task identifier 62 connected thereto, given plan task end time 64, cooperation-partner plan identifier 65, and cooperation-partner task identifier 66 are associated with each other.

Among those values, the value of the given plan task identifier 62 represents task names for uniquely identifying tasks to which resources are to be allocated in the car operation plan that is the given plan described above. The value of the given plan task start time 63 represents a start time of a task represented by the given plan task identifier 62. The value of the given plan task end time 64 represents an end time of the task represented by the given plan task identifier 62. The value of the cooperation-partner plan identifier 65 represents the type of the yard shunting plan (other plan) cooperating with the car operation plan (given plan). The value of the cooperation-partner task identifier 66 represents task names for uniquely identifying tasks cooperating with the task represented by the given plan task identifier 62 among the tasks to which the resources are to be allocated.

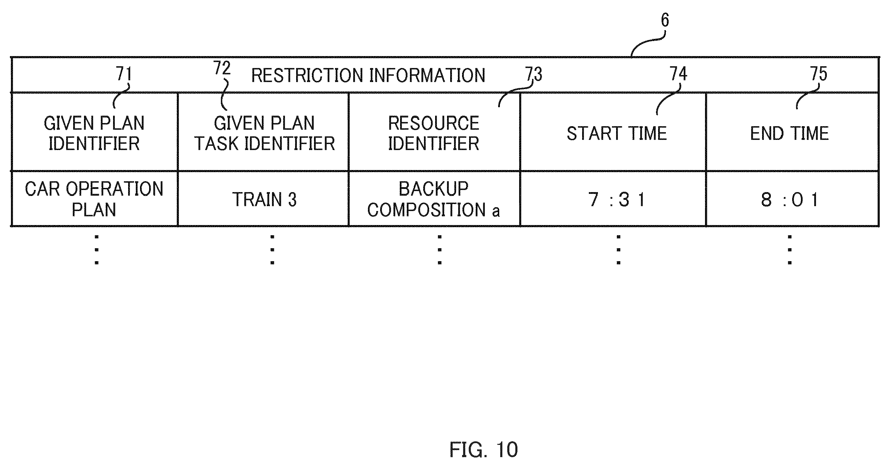

Subsequently, with reference to Fig. 10, the restriction information 6 according to this embodiment is described. The restriction information 6 is restriction information used for re-creation processing of the given plan by the resource operation plan creation unit 1006 in the resource operation planning assist apparatus 1000. Specifically, when the resource operation planning assist apparatus 1000 receives an instruction to change a resource or task for the given plan through the input device 1201, the resource operation planning assist apparatus 1000 specifies alternative resource candidates that can be allocated to the task concerned instead of the current resources or alternative task candidates to which the resource concerned can be allocated instead of the current tasks, by using a predetermined algorithm based on the plan information 1, the cooperation definition information 3, and the task connection information 4 (cooperation task information) of the given and other plans. Then, the restriction information 6 is information about each alternative resource or task specified by the user using the input device 1201 from among the alternative resource or task candidates thus specified.

Each of records in the restriction information 6 shown in Fig. 10 has a configuration in which respective values of given plan identifier 71, given plan task identifier 72, resource identifier 73, start time 74, and end time 75 are associated with each other. One record defines one piece of the restriction information.

The value of the given plan identifier 71 in the record described above represents the type of the given plan. The value of the given plan task identifier 72 represents task names for uniquely identifying tasks to which resources are to be allocated in the given plan. The value of the start time 74 represents a start time of a task represented by the given plan task identifier 72. The value of the end time 75 represents an end time of the task represented by the given plan task identifier 72.

Note that, although not particularly shown, the history information 7 according to this embodiment is information indicating a history of changes made in the past by the user to the given plan created by the resource operation planning assist apparatus 1000. Moreover, various information about the resources, tasks, plans, and the like can be acquired by appropriately referring to the plan information 1 based on the identifiers such as the task identifiers and the plan identifiers.

### Main Flow Example

Hereinafter, with reference to the drawings, description is given of actual procedures of a resource operation planning assist method according to this embodiment. Various operations corresponding to the resource operation planning assist method described below are realized by the program 1002 executed by the resource operation planning assist apparatus 1000. Also, the program 1002 includes codes for performing the various operations described below.

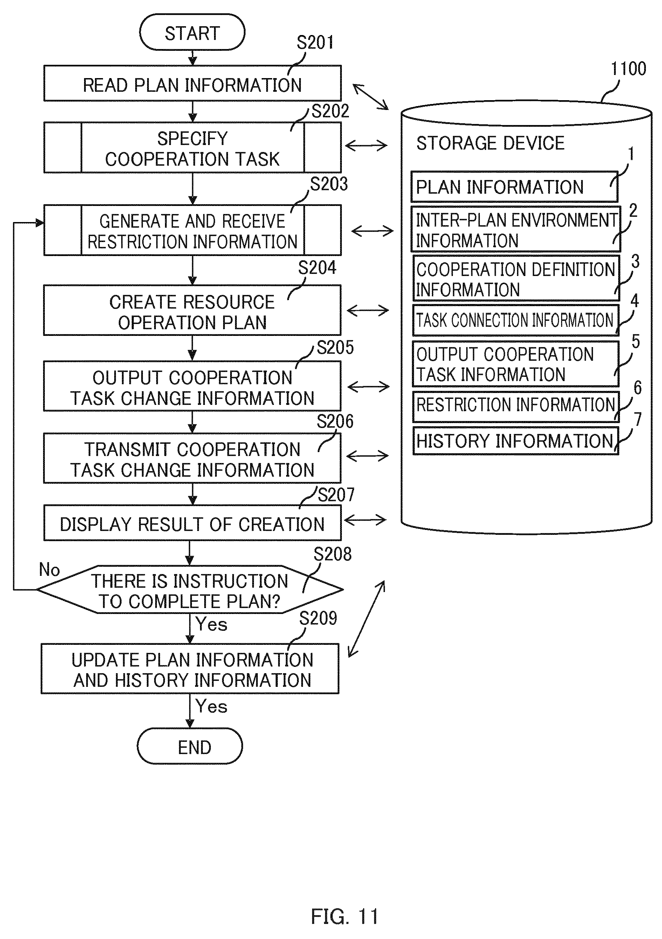

Fig. 11 is a diagram showing a main flow example of the resource operation planning assist method according to this embodiment. The plan information read unit 1003 in the resource operation planning assist apparatus 1000 reads plan information 1 about the given plan stored in the storage device 1100 and plan information 1 about the other plan from a predetermined apparatus on the communication network 10 through the communication device 1203 (Step S201). In the case of this embodiment,

The cooperation task specification unit 1004 in the resource operation planning assist apparatus 1000 extracts task information allocated to the resources shared by the given plan and the other plan from the respective plan information 1 obtained in Step S201 described above, based on the inter-plan environment information 2 and the cooperation definition information 3 held in the storage device 1100, associates cooperating tasks with each other among the tasks in the given plan and the tasks in the other plan, and stores the associated tasks in the task connection information 4 in the storage device 1100 (Step S202). This processing is described later based on the flow shown in Fig. 12.

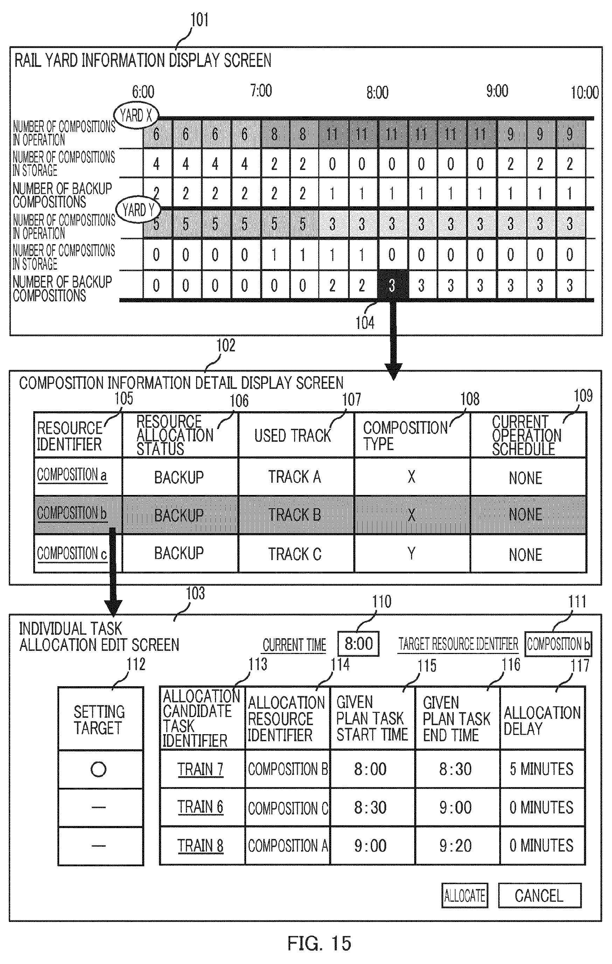

Next, the resource operation plan creation unit 1006 in the resource operation planning assist apparatus 1000 generates the restriction information 6 based on the respective plan information 1 of the given and other plans obtained in Step S201 described above, the inter-plan environment information 2 and the task connection information 4 held in the storage device 1100, and user specification (specification of each alternative resource or task from the alternative resource candidates or alternative task candidates) received through the input device 1201 (Step S203). This processing is described later based on the flow shown in Fig. 15.

Subsequently, the resource operation plan creation unit 1006 in the resource operation planning assist apparatus 1000 re-creates a given plan (resource operation plan) using a predetermined algorithm under the condition that the restriction information obtained as the user specification described above is applied to the plan information 1 of the given plan obtained in Step S201 (Step S204). For such creation of the resource operation plan, an existing mathematical programming algorithm is used, such as linear programming and a branch and bound method, for example. In practice, the resource operation plan creation unit 1006 creates a plan as needed by implementing a program corresponding to the algorithm described above.

Next, the plan result management unit 1007 in the resource operation planning assist apparatus 1000 adds information of tasks affected by the re-creation of the given plan (resource operation plan) among the cooperating tasks stored in the task connection information 4 described above to the output cooperation task information 5 in the storage device 1100 (Step S205). Here, in order to determine whether or not the tasks are affected, the plan result management unit 1007 specifies differences by comparing the attribute information between the tasks in the original plan held in the plan information 1 in the storage device 1100 and the tasks in the re-created given plan.

Also, the plan result management unit 1007 transmits the output cooperation task information 5 described above as change information to the management apparatus for the other cooperating plan (Step S206).

Next, the resource operation plan creation unit 1006 or the plan result management unit 1007 in the resource operation planning assist apparatus 1000 presents the given plan (resource operation plan) re-created in Step S204 described above to the user through the display device 1200 (Step S207). In this event, when plan re-creation is performed for the other plan, changed contents are displayed on the corresponding display device after waiting for the result of such re-creation.

Thereafter, the resource operation plan creation unit 1006 in the resource operation planning assist apparatus 1000 determines whether or not the input device 1201 has received a termination instruction from the user (Step S208). When the termination instruction is received as a result of the determination (Step S208: Yes), the resource operation plan creation unit 1006 updates the plan information 1 of the corresponding given plan in the storage device 1100 with the plan information of the given plan re-created in Step S204, and also updates the history information 7 (Step S209) before terminating the processing. On the other hand, when no termination instruction is received as a result of the determination described above (Step S208: No), the resource operation plan creation unit 1006 returns the processing to Step S203. The processing thus far is the main flow.

### Cooperation Task Specification Flow

Next, description is given of details of Step S202 in the main flow described above, i.e., cooperation task specification processing. Fig. 12 is a flowchart showing Procedure Example 1 of the resource operation planning assist method according to this embodiment. To be more specific, Fig. 12 shows a flow for specifying task pairs of cooperating tasks among the tasks in the car operation plan that is the given plan and the tasks in the yard shunting plan that is the other plan cooperating therewith.

In this flow, the plan information read unit 1003 first acquires plan information 1 of the car operation plan that is the given plan from the storage device 1100 (Step S701). Likewise, the plan information read unit 1003 acquires plan information of the other plan from the management apparatus or the like for the other plan on the communication network 10 (Step S702). The plan information of the other plan acquired here is more than one piece of information if there is more than one other plan.

Then, the cooperation task specification unit 1004 selects one task according to a predetermined rule (e.g.: order of registration, ascending order of values included in the identification information, and the like; hereinafter the same) from the task group of the given plan acquired in Step S701 described above (Step S703). The cooperation task specification unit 1004 also selects one task according to the predetermined rule from one or more other plans acquired in Step S702 described above (Step S704).

Moreover, the cooperation task specification unit 1004 determines whether or not the task pair of the given and other plans acquired by the selections in Steps S703 and S704 described above meets the cooperation condition defined in the cooperation definition information 3 (Step S705). In this determination, the cooperation task specification unit 1004 perform a search for each record in the cooperation definition information 3 using each of the values of the task type of the given plan selected in Step S703 described above, the task type of the other plan selected in Step S704 and the corresponding other plan (cooperation-partner plan), the resource identifiers allocated to the given plan task and the other plan task, respectively, the start and end times (specified in the corresponding plan information) of each of the corresponding tasks, and the execution location of each of the corresponding tasks (specified in the corresponding plan information) as a search key. Then, when a record that coincides with a combination of the values as the search keys described above can be searched, the cooperation task specification unit 1004 determines that the task pair "meets the rule".

When the task pair does not meet the cooperation condition 34 in each of the records in the cooperation definition information 3 as a result of the determination in Step S705 described above (Step S705: No), the cooperation task specification unit 1004 advances the processing to Step S707. On the other hand, when the task pair meets the cooperation condition 34 in any of the records in the cooperation definition information 3 as a result of the determination described above (Step S705: Yes), the cooperation task specification unit 1004 advances the processing to Step S706.

In Step S706, the cooperation task specification unit 1004 adds the task pair information described above, i.e., the given plan identifier, the given plan task identifier, the cooperation-partner plan identifier, and the cooperation-partner task identifier, as one record, to the task connection information 4, and then executes Step S707.

In Step S707, the cooperation task specification unit 1004 determines whether or not a series of processing (Steps S704 to S706) is performed for all the tasks in the other plan. As a result of the determination, when there is a task yet to be subjected to the series of processing described above among the tasks in the other plan (Step S707: No), the cooperation task specification unit 1004 returns the processing to Step S704. On the other hand, as a result of the determination described above, when the series of processing (Steps S704 to S706) is completed for all the tasks in the other plan (Step S707: Yes), the cooperation task specification unit 1004 advances the processing to Step S708. Thus, processing efficiency can be enhanced by exhaustively performing the cooperation task specification while also considering the case where a plurality of tasks in one or more other plans cooperate with one of the tasks in the given plan.

Subsequently, in Step S708, the cooperation task specification unit 1004 determines whether or not no task pair can be specified, which meets the rule in the cooperation definition information 3 for the tasks in any of the other plans by the determination in Step S705 described above, as for the task in the given plan that is currently selected (obtained in the latest Step S701), i.e., no record is added to the task connection information 4. As a result of the determination, when no record can be registered in the task connection information 4 for the given plan task that is currently selected (S708: Yes), the cooperation task specification unit 1004 advances the processing to Step S709. On the other hand, as a result of the determination described above, when a record can be registered in the task connection information 4 for the given plan task that is currently selected (S708: No), the cooperation task specification unit 1004 advances the processing to Step S709.

In Step S709, the cooperation task specification unit 1004 adds the given plan identifier, the given plan task identifier, an empty plan identifier, and an empty task identifier, as one record, to the task connection information 4 for the given plan task for which the record addition to the task connection information 4 has not succeeded, and then advances the processing to Step S710.

Next, in Step S710, the cooperation task specification unit 1004 determines whether or not the processing of Steps S704 to S709 described above is completed for all the tasks in the given plan. As a result of the determination, when there is a task yet to be processed in the given plan (Step S710: No), the cooperation task specification unit 1004 returns the processing to Step S703. On the other hand, when the processing is completed for all the tasks in the given plan (Step S710: Yes), the cooperation task specification unit 1004 terminates the processing. The processing thus far is the flow of the processing for specifying the cooperating tasks.

Here, the cooperation task specification flow shown in Fig. 12 is more specifically described taking as an example the case where the task "train 1" is obtained in Step S701, to which the resource "composition A" is allocated in the car operation plan that is the given plan shown in Fig. 3. Note that the task in the given plan is specified by the respective values of the resource identifier "composition A", the task identifier "train 1" (the task type is "train"), the start time "6:05", and the end time "6:30".

In this case, the cooperation task specification unit 1004 selects one of the records included in the yard shunting plan shown in Fig. 5, i.e., one task. For example, it is assumed that the cooperation task specification unit 1004 selects a task having the resource identifier "composition A", the task type "departure", the task identifier "departure 1", the start time "6:00", the end time "6:05", and the used track "departure/arrival line".

The cooperation task specification unit 1004 determines whether or not the task (the resource identifier "composition A", the task identifier "train 1" (the task type is "train"), the start time "6:05", and the end time "6:30") selected for the given plan described above and the task (the resource identifier "composition A", the task type "departure", the task identifier "departure 1", the start time "6:00", the end time "6:05", and the used track "departure/arrival line") selected for the other plan coincide with the contents specified in each record in the cooperation definition information 3 (Fig. 6).

In the case of the selected tasks of the given and other plans described above, the cooperation task specification unit 1004 can specify a record in which the pair of the given plan task type 31 and the cooperation-partner task type 33 is "train" and "departure" and the cooperation-partner plan type is "yard shunting" among the records in the cooperation definition information 3. Moreover, the start time "6:05" of the given plan coincides with the end time "6:05" of the other plan, and "departure" of "train" has the same execution location. Therefore, in the cooperation definition information 3 shown in Fig. 6, a record including the values of the given plan identifier "car operation plan", the given plan task identifier "train 1", the cooperation-partner plan identifier "yard shunting plan" , and the cooperation-partner plan task identifier "departure 1", which meets all the cooperation conditions 34 in the record 38 and represents the task pair of the given and other plans, can be registered in the task connection information 4.

### Restriction Information Generation Flow

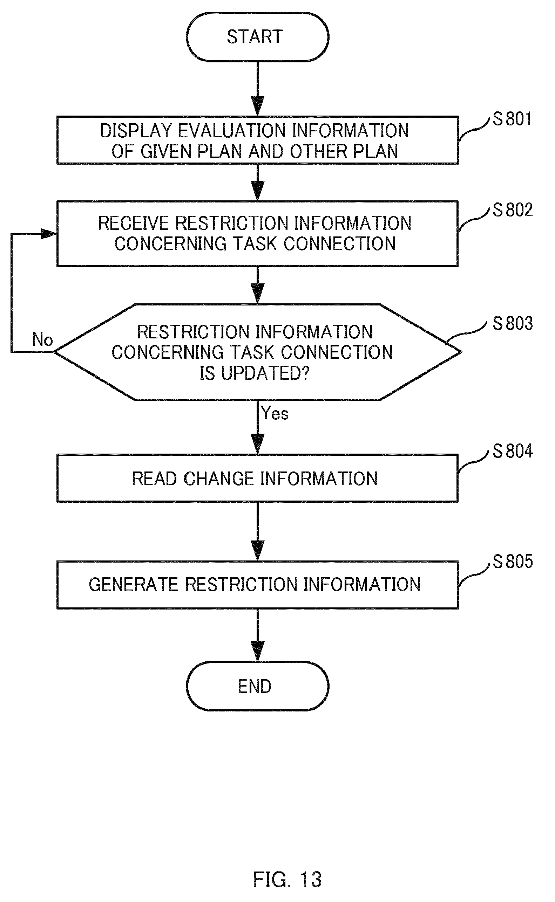

Next, with reference to the drawing, description is given of Step S203 in the flow shown in Fig. 11, i.e., restriction information generation processing. Fig. 13 is a flowchart showing Procedure Example 2 of the resource operation planning assist method according to this embodiment. This embodiment assumes works for car operation reordering and a yard shunting plan which are to be performed when disruption occurs to train services. The car operation reordering is a work for a case where a train service plan is suddenly changed due to an accident, car trouble or the like, the work aiming at changing car allocation to trains according to the changed service plan. Schemes to change the car allocation include: to change a car allocated to a train at a turn-around station; to temporarily allocate a backup train stored in the rail yard; to temporarily store cars in the rail yard when there are excess cars; and the like. Also, the yard shunting plan is implemented every day in each rail yard because the cars are required by law to be inspected periodically according to the distance traveled and the number of days traveled. In the car operation reordering, the car allocation is changed by combining the schemes as described above, taking into consideration execution of an operation such as inspection in the rail yard.

First, it is assumed that the cooperation influence value calculation unit 1005 (or the resource operation plan creation unit 1006) in the resource operation planning assist apparatus 1000 receives an instruction to change a resource to be allocated to a task in the given plan or the other plan from a user who desires to fix a service delay due to car trouble, for example, for the resource allocated to the task specified in the task connection information 4 through the input device 1201.

In this case, in response to the instruction, the cooperation influence value calculation unit 1005 specifies each alternative resource candidate which can be allocated to a predetermined task instead of the current resource in the given plan or each alternative task candidate to which a predetermined resource can be allocated instead of the current task, using a predetermined algorithm, based on the respective information such as the respective plan information 1, the inter-plan environment information 2, the cooperation definition information 3, and the task connection information 4 (cooperation task information). Then, the cooperation influence value calculation unit 1005 displays the information of the alternative resource candidate or alternative task candidate obtained here on the display device 1200. Moreover, in this event, the cooperation influence value calculation unit 1005 calculates an influence value when the current resource or the current task are replaced by the alternative resource candidate or the alternative task candidate described above, based on the inter-plan environment information 2 held in the storage device 1100, and displays the calculated influence value, as evaluation information, on the display device 1200 in association with the alternative resource candidate or alternative task candidate described above (S801).

Note that the evaluation information described above includes differences in the respective items (e.g.: the start and end times of the task) between the current plan and the plan when the resource or task replacement described above is performed. For example, the evaluation information includes a delay from a scheduled start time of the task, a history of changes in resource allocation to the task, and the like. These difference items are generated by acquiring corresponding task information from the plan information 1 and the history information 7 based on the task identifier of each of the records stored in the task connection information 4, and then calculating differences between the current plan and the plan after the replacement described above taking into consideration the inter-plan environment information 2.

Subsequently, in Step S802, the cooperation influence value calculation unit 1005 receives restriction information about task connecting from the user through the input device 1201. The restriction information corresponds to information about an alternative resource or task specified by the user from among the alternative resource candidates or alternative task candidates displayed on the display device 1200 in Step S801 described above. Moreover, the restriction information received includes four kinds of information, "resource allocation to specified task", "task allocation to specified resource", "batch resource allocation", and "batch task allocation". The processing of receiving such various kinds of restriction information is described later.

Next, in Step S803, the cooperation influence value calculation unit 1005 determines whether or not the restriction information about the task connection is updated in Step S802 described above, i.e., there is a change in the allocation of the resource or task from the current plan. As a result of the determination, when the restriction information is not updated (Step S803: No), the cooperation influence value calculation unit 1005 returns the processing to Step S802. On the other hand, when the restriction information is updated (Step S803: Yes), the cooperation influence value calculation unit 1005 advances the processing to Step S804.

In Step S804, the resource operation plan creation unit 1006 (or the cooperation influence value calculation unit 1005) makes an inquiry to the management apparatus or the like for the other plan about the update of the task information of the other plan, and acquires the updated cooperation-partner task information or restriction information in the other plan. Upon reading of the cooperation-partner task information, a request is transmitted to the corresponding apparatus through the communication network 10, based on the cooperation-partner task identifier added to the task connection information 4, to acquire the cooperation-partner task information.

Next, the resource operation plan creation unit 1006 generates restriction information based on the restriction information received in Step S802 described above and the information read in Step S804, and adds the generated restriction information to the restriction information 6 in the storage device 1100 (Step S805). The processing thus far is the procedure for the generation of the restriction information.

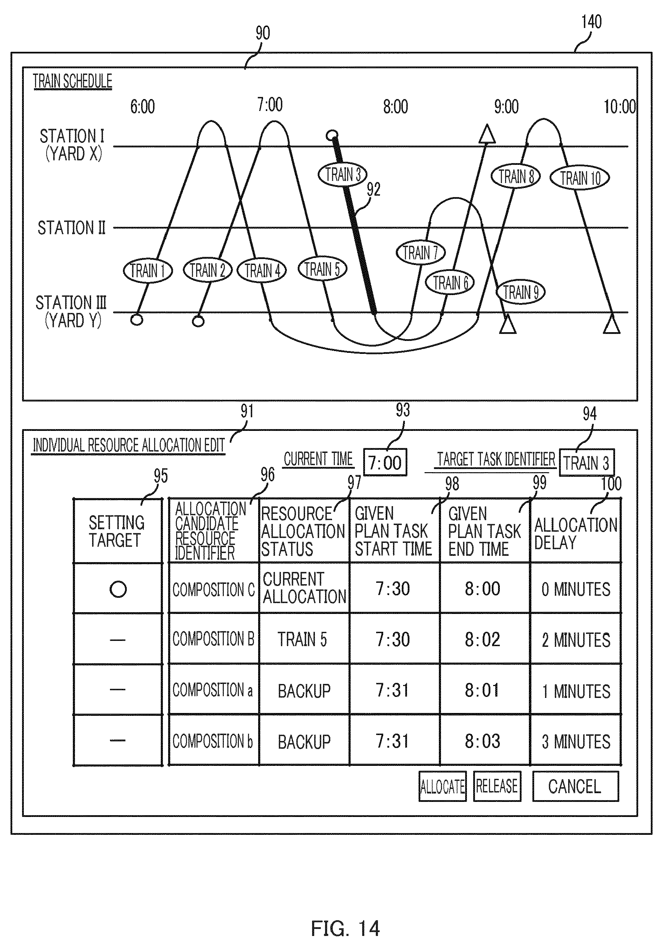

Hereinafter, with reference to Fig. 14, description is given of a specific example of each of the processing described above. Fig. 14 is a diagram showing an allocation management screen 140 according to this embodiment. The allocation management screen 140 shown in Fig. 14 includes a train schedule display region 90 and an individual resource allocation edit region 91. Among these regions, in the train schedule display region 90, when and where the train is running can be checked by displaying the train lines and headshunts with the station in the vertical axis and time in the horizontal axis. Moreover, input of operation changes, such as suspension of train service and changes in headshunt can be received by the user selecting the respective train lines and headshunts.

The individual resource allocation edit region 91 is a region which is blank by default, for example, and in which information is displayed in response to an event of selecting a certain train line in the train schedule display region 90 described above by the user through the input device 1201. The individual resource allocation edit region 91 serves as an interface for the user to perform the "resource allocation to specified task".

It is assumed that the user selects a train line 92 corresponding to "train 3" (task) by clicking thereon or the like in the train schedule display region 90. In such a case, the cooperation influence value calculation unit 1005 (or the resource operation plan creation unit 1006) sets the value "train 3" in a target task identifier field 94, searches for another composition (resource) which can be allocated to "train 3", i.e., the alternative resource candidate described in Step S801, and displays the acquired information of the other composition that is the alternative resource candidate in the individual resource allocation edit region 91 together with information of "composition C" (hereinafter, current allocation) currently allocated to "train 3". In the case of the individual resource allocation edit region 91 in Fig. 14, "composition B", "composition a", and "composition b" are listed as the alternative resource candidates, together with the currently allocated "composition C".

Moreover, in this event, the cooperation influence value calculation unit 1005 calculates a delay time for the resource allocation to "train 3", as an influence value when the currently allocated "composition A" is replaced by the other composition that is the alternative resource candidate described above, based on the inter-plan environment information 2 as described for Step S801 described above, and displays the calculated delay time as allocation delay (evaluation information) in association with the other compositions described above.

Meanwhile, the user viewing the individual resource allocation edit region 91 on the display device 1200 recognizes the displayed current allocation and other compositions (alternative resource candidates) together with the respective information such as the allocation delay thereof, and selects "backup composition a" having the minimum allocation delay, for example, as one least affected by the allocation change. In this selection operation, the user sets "○" by clicking on the field corresponding to "backup composition a" to be selected in a setting target column 95 in the individual resource allocation edit region 91, and further clicks on an allocation button 101.

On the other hand, the cooperation influence value calculation unit 1005 receives such click operations through the input device 1201, acquires the value "train 3" that is the task set in the target task identifier field 94 and the value "backup composition a" in an allocation candidate resource identifier 96 of the composition to be selected, and adds the acquired values to the restriction information 6 in the storage device 1100.

Note that the cooperation influence value calculation unit 1005 adds a record of "backup composition a" in the car operation plan in order to perform a setting for allocating "backup composition a" to be selected described above to "train 3", and sets operation information (start and end times and the like) of "train 3" in the record. Likewise, the cooperation influence value calculation unit 1005 adds a new record including values such as task type "departure", task identifier "departure 5", start time "07:29", end time "07:31", and used track "departure/arrival line" for "backup composition a" also in the yard shunting plan. The cooperation task specification unit 1004 deletes the record for "train 3" already registered in the task connection information 4, and executes the cooperation task specification processing (the same as the flow shown in Fig. 12) at least for "train 3" based on the car operation plan and the yard shunting plan after the addition of each record described above, thereby registering a new record generated for "train 3" in the task connection information 4.

Here, the allocation management screen 140 shown in Fig. 14 is described in detail. The individual resource allocation edit region 91 in the allocation management screen 140 is the collection of records including respective values of current time 93, target task identifier 94, setting target 95, allocation candidate resource identifier 96, resource allocation status 97, given plan task start time 98, given plan task end time 99, and allocation delay 100 that is an influence value on the given plan.

Among these values, the value of the current time 93 represents the current time of the implemented plan. The value of the target task identifier 94 represents a train identifier of the train line 92 selected by the user in the train schedule display region 90.

The value of the setting target 95 represents a selection result ("○" in Fig. 14) when the user selects a composition allocation destination for the train represented by the target task identifier 94. The composition allocated here is a composition represented by the allocation candidate resource identifier 96 in the same row as the setting target 95.

The value of the allocation candidate resource identifier 96 represents a name of each of the compositions that can be allocated to the target task identifier 94. The compositions that can be allocated can be created by referring to the plan information 1, the inter-plan cooperation information 2, and the task connection information 4 in the storage device 1100 based on the rule represented by the condition type 37 "cooperatable condition" in the cooperation definition information 3.

The value of the resource allocation status 97 represents a status of allocation to the composition represented by the allocation candidate resource identifier 96. Each resource allocation status can be specified by referring to the task connection information 4 in the storage device 1100. The value of the given plan task start time 98 represents a task execution start time when the composition represented by the allocation candidate resource identifier 96 is allocated to the train represented by the target task identifier 94. The given plan task end time 99 represents an end time of the task. The value of the allocation delay 100 is one specific example of the influence value on the given plan, which can be calculated by comparing the attribute information of the given and other plan tasks. To be more specific, the value of the allocation delay 100 represents a difference between the given plan task start time 98 and the execution start time of the train represented by the target task identifier 94. For example, the given plan task start time 98, the given plan task end time 99, and the allocation delay 100 can be calculated by acquiring a given plan task in the current plan from the plan information 1 in the storage device 1100, also acquiring information about a cooperation-partner task based on the cooperation-partner task identifier in the task connection information 4, and then comparing attribute information of the two tasks based on the inter-plan environment information 2.

### Kinds of Restriction Information Received

Here, description is given of the kinds of the restriction information received from the user in the flow shown in Fig. 13. As the kinds thereof, four kinds of information, "resource allocation to specified task", "task allocation to specified resource", "batch resource allocation", and "batch task allocation" can be assumed. The "resource allocation to specified task" is already described with reference to Fig. 14 and the like.

As for the "task allocation to specified resource" among the four kinds, the resource operation planning assist apparatus 1000 acquires a restriction for connecting resources to tasks by outputting a list of tasks that can be allocated to a resource specified by the user and further receiving user selected for the tasks to be allocated. The restriction information "task allocation to specified resource" includes a shared resource identifier, a given plan task identifier, a cooperation-partner plan identifier, and a cooperation-partner task identifier. Among these, the shared resource identifier is a resource name for uniquely identifying a resource shared between the given and other plans. The given plan task identifier is a task name for uniquely identifying a task of the given plan. The cooperation-partner plan identifier is a plan name for uniquely identifying a plan cooperating with the given plan. The cooperation-partner task identifier is a task name for uniquely identifying a task in the plan cooperating with the given plan. The resource operation planning assist apparatus 1000 can acquire, as needed, attribute information about the resources, tasks, plans, and the like by referring to the plan information 1 based on the respective identifiers described above.

Here, in the setting of the restriction information "task allocation to specified resource", the resource operation planning assist apparatus 1000 outputs a list of tasks that can be allocated to an arbitrary resource by checking the attribute information of the resource connected to the attribute information of the other plan task held in the plan information 1 in the storage device 1100 with the attribute information of the resource specified by the user according to the rule represented by the condition type 37 "cooperatable condition" in the cooperation definition information 3. Moreover, when receiving the user selection for the task to be allocated, the resource operation planning assist apparatus 1000 updates the information of the given plan task to the information of the other plan task selected by the user, and also updates or adds the corresponding record in the task connection information 4.

Fig. 15 shows a transition example of a screen used for the processing of "task allocation to specified resource" described above. The transition screens shown in Fig. 15 include a rail yard information display screen 101, a composition information detail display screen 102, and an individual task allocation edit screen 103.

Among those screens, the rail yard information display screen 101 takes time as the horizontal axis, and displays the number of compositions in operation, the number of compositions in storage, and the number of backup compositions indicating operation situations at respective rail yards ("yard X" and "yard Y") for every arbitrary time slot (for example, every 15 minutes in Fig. 15). The number of compositions in operation represents the number of compositions to which tasks such as inspection and cleaning are allocated in the time slot at the rail yard. Also, it is preferable to color respective cells (gradually and selectively change the density in the example shown in Fig. 15) based on the busyness of the rail yard. Moreover, the number of compositions in storage represents the number of compositions not in operation, which are housed in the rail yard in the time slot of the rail yard. The number of backup compositions represents the number of compositions which are stored in the rail yard and not scheduled to operate, but can be taken out of the rail yard as needed in the time slot of the rail yard.

Such contents of the number of compositions in operation, the number of compositions in storage, and the number of backup compositions included in the rail yard information display screen 101 are displayed by the resource operation planning assist apparatus 1000 referring to the plan information 1, the inter-plan cooperation information 2, and the task connection information 4 in the storage device 1100.

Moreover, when the user selects a predetermined cell among the number of compositions in operation, the number of compositions in storage, and the number of backup compositions, the resource operation planning assist apparatus 1000 displays, in response to the user selection, a list of the composition information corresponding to the selected cell on the composition information detail display screen 102. The composition information detail display screen 102 in Fig. 15 is one displayed when the user selects a cell 104 in the number of backup compositions on the rail yard information display screen 101.

The composition information detail display screen 102 includes a resource identifier 105, a resource allocation status 106, a used track 107, a composition type 108, and a current operation schedule 109. Among these, the resource identifier 105 represents a list of identifiers of the backup compositions represented by the cell 104 selected by the user on the rail yard information display screen 101. The resource allocation status 106 represents the status of allocation of the compositions represented by the resource identifier 105 to the train. As for each resource allocation status, the task connection information 4 in the storage device 1100 is referred to.

The used track 107 represents track names used by the compositions represented by the resource identifier 105. The composition type 108 represents composition types of the compositions represented by the resource identifier 105. The current operation schedule 109 represents operation schedules, such as inspection and repair, for the compositions represented by the resource identifier 105 in the current yard shunting plan. Each current operation schedule is specified by the resource operation planning assist apparatus 1000 referring to the task connection information 4 in the storage device 1100.

When the user selects a predetermined record among the records on the composition information detail display screen 102 described above, the resource operation planning assist apparatus 1000 displays, in response to the user selection, the individual task allocation edit screen 103 for performing the "task allocation to specified resource" corresponding to the composition (i.e., resource). The resource operation planning assist apparatus 1000 displays the trains (tasks) that can be allocated to the composition (resource) selected by the use on the individual task allocation edit screen 103, and receives the task to be allocated thereamong from the user. The individual task allocation edit screen 103 shown in Fig. 15 is a screen example when "composition b" that is the backup resource on the composition information detail display screen 102 is selected.

The individual task allocation edit screen 103 includes current time 110, target resource identifier 111, setting target 112, allocation candidate task name 113, allocation resource identifier 114, given plan task start time 115, given plan task end time 116, and allocation delay 117 as an example of the influence value on the given plan.

Among those described above, the current time 110 represents the current time of the plan that is being implemented. The target resource identifier 111 represents a composition name of a composition record selected on the composition information detail display screen 102. The setting target 112 represents an interface through which the user selects an allocation destination train (task) of the composition represented by the target resource identifier 111. The train to be the allocation destination is a train represented by the allocation candidate task name 113 in the same row as the setting target 112.

The allocation candidate task identifier 113 represents respective trains (tasks) that can be allocated to the composition (resource) represented by the target resource identifier 111. The trains that can be allocated are created by the resource operation planning assist apparatus 1000 referring to the plan information 1, and inter-plan cooperation information 2, and the task connection information 4 in the storage device 1100 based on the rules indicated by the condition type 37 "cooperatable condition" in the cooperation definition information 3.

The allocation resource identifier 114 represents a composition allocation status of the train represented by the allocation candidate task identifier 113. The respective allocation resource identifiers are created by the resource operation planning assist apparatus 1000 referring to the plan information 1 in the storage device 1100 based on the allocation candidate task identifier 113.

The given plan task start time 115 represents a task execution start time when the composition represented by the target resource name 129 is allocated to the train represented by the allocation candidate task identifier 113. Likewise, the given plan task end time 116 represents a task end time. The allocation delay 117 is one specific example of the influence value on the given plan, which can be calculated by comparing the attribute information of the given and other plan tasks. The allocation delay 117 represents a difference between the given plan task start time 115 and the execution start time of the train represented by the allocation candidate task identifier 113. For example, the given plan task start time 115, the given plan task end time 116, and the allocation delay 117 can be calculated by the resource operation planning assist apparatus 1000 acquiring the given plan task in the basic plan from the plan information 1 in the storage device 1100, acquiring information of a cooperation-partner task based on the cooperation-partner task identifier in the task connection information 4, and comparing the attribute information of the two tasks based on the inter-plan environment information 2.

As a result of receiving the restriction information corresponding to the "task allocation to specified resource" on the individual task allocation edit screen 103 described above, the resource operation planning assist apparatus 1000 adds the target resource identifier 111, the allocation candidate task identifier 113 of the selected record, and the task information thereof to the restriction information 6 in the storage device 1100. Moreover, the respective records corresponding to the original task (equivalent to the resource allocation status 106) allocated to the target resource identifier 111 and the allocation candidate task identifier 113 are deleted from the task connection information 4, and the respective tasks are associated with each other as new cooperating tasks and added again to the task connection information 4.

Meanwhile, as for the restriction information "batch task allocation", the resource operation planning assist apparatus 1000 acquires a restriction for connecting the resource to the task by collectively allocating tasks to a plurality of resources based on the cooperation-partner plan, time slot, allocation type, and the number of resources specified by the user. To be more specific, the resource operation planning assist apparatus 1000 allocates tasks to a specified number of resources or releases the tasks from the resources in the time slot specified by the user. In this event, a cooperation-partner task connected to the task receiving the change is extracted from the specified cooperation-partner plan, and is connected to the given plan task.

Moreover, in setting the restriction information "task allocation to specified resource", the resource operation planning assist apparatus 1000 acquires a restriction for connecting the given plan task to the resource by outputting a list of given plan tasks that can be allocated to the resource specified by the user and also receiving selection of a task to be allocated from the user. This restriction information "task allocation to specified resource" includes the given plan task identifier, shared resource identifier, cooperation-partner plan identifier, and cooperation-partner task identifier.

Among those described above, the given plan task identifier is a task name for uniquely identifying the given plan task. The shared resource identifier is a resource name for uniquely identifying a resource shared between the given and other plans. The cooperation-partner plan identifier is a plan name for uniquely identifying a plan cooperating with the given plan. The cooperation-partner task identifier is a task name for uniquely identifying a task in the plan cooperating with the given plan. The resource operation planning assist apparatus 1000 acquires attribute information of the other plan task held in the plan information 1 in the storage device 1100 based on the attribute information of the resource specified by the user, and outputs a list of tasks that can be allocated to an arbitrary resource by checking the acquired attribute information of the other plan task with the rules indicated by the condition type 37 "cooperatable condition" in the cooperation definition information 3 among all the given plan tasks.

Moreover, when receiving the selection of the task to be allocated from the user, the resource operation planning assist apparatus 1000 updates the resource information of the given plan task selected by the user to the specified resource information, and also updates or adds the corresponding record in the task connection information 4.

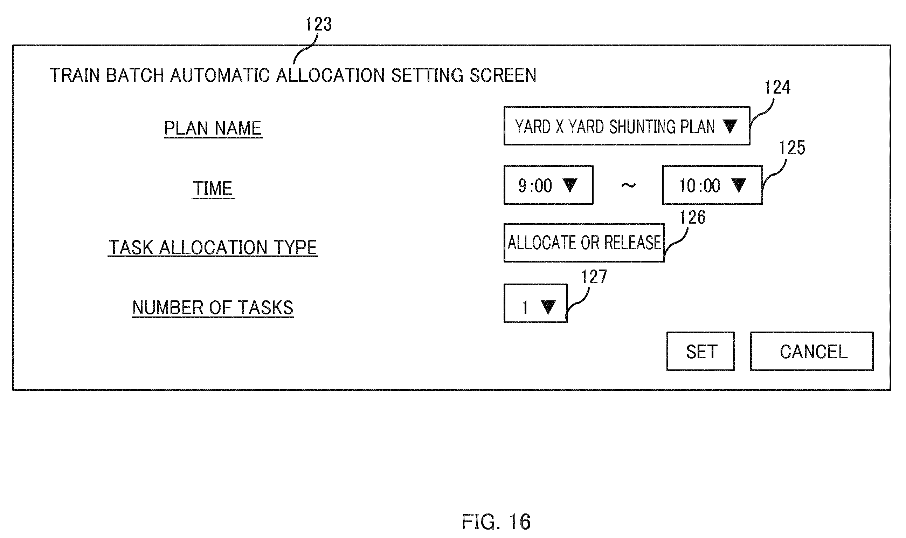

Fig. 16 shows a train batch automatic allocation setting screen 123 that is a reception screen for performing the "batch task allocation". On this screen, the resource operation planning assist apparatus 1000 automatically generates restriction information for collectively setting tasks that can be allocated to an appropriate resource based on the respective information, such as the plan name, time, task allocation type, and the number of tasks, specified by the user. The generated restriction information is stored in the task connection information 4 and the restriction information 6 in the storage device 1100 through the same procedure as that shown in Fig. 14.

The train batch automatic allocation setting screen 123 includes plan name 124, time 125, task allocation type 126, and the number of tasks 127. Among these, the plan name 124 represents a cooperation-partner plan identifier cooperating with the given plan, and is used to draw a target composition (resource) from the information of the corresponding cooperation-partner plan. The time 125 represents a target time slot for the batch task allocation, and is used to draw a train (task) that can be allocated from the given plan. The task allocation type 126 is used for the user to select whether to allocate the train (task) to the composition (resource) or to release the already allocated composition from the train when performing the batch task allocation. The number of tasks 127 represents the number of trains (tasks) to be changed when performing the batch task allocation.

Here, description is given of a restriction information generation flow in the "batch task allocation". Upon receipt of an input from the user through the train batch automatic allocation setting screen 123 described above, the resource operation planning assist apparatus 1000 acquires a list of task information in the time slot set in the time 125 from the plan information 1 in the storage device 1100. Next, when the task allocation type 126 is "allocation", the resource operation planning assist apparatus 1000 acquires cooperation-partner plan information by referring to the plan information 1, the inter-plan cooperation information 2, and the task connection information 4 in the storage device 1100 based on the rules indicated by the condition type 37 "cooperatable condition" in the cooperation definition information 3, and also acquires a list of resource information that can be allocated in the specified time slot.

Moreover, the resource operation planning assist apparatus 1000 transmits the given plan task identifier, the restriction of the task start and end times of the given plan, and the restriction of the number of tasks 127 to the other apparatus having the yard shunting plan as a plan target, for the acquired task information list and resource information list. When the other apparatus performs re-creation, the resource operation planning assist apparatus 1000 acquires respective cooperating tasks and a list of resources connected thereto (equivalent to the output cooperation task information) as a result of the re-creation. The resource operation planning assist apparatus 1000 stores a list of the tasks and resources connected to each other in the task connection information 4 and the restriction information 6 in the storage device 1100.

On the other hand, when the task allocation type 126 is "release", the resource operation planning assist apparatus 1000 acquires information of the cooperation-partner plan by referring to the plan information 1, the inter-plan cooperation information 2, and the task connection information 4 in the storage device 1100, and also acquires a resource information list connected to the acquired task information list. Next, the resource operation planning assist apparatus 1000 transmits restrictions to the cooperating other apparatus in the same manner as the above, for the acquired task information list and the resource information list connected thereto. When obtaining each cooperating task and a list of resources connected thereto as an output result from the other apparatus, the resource operation planning assist apparatus 1000 updates the task connection information 4 and the restriction information 6 in the storage device 1100 based on those obtained.

Subsequently, "batch resource allocation" is described. In setting of the restriction information "batch resource allocation", the resource operation planning assist apparatus 1000 acquires a restriction for connection the given plan task to the resource by collectively allocating resources to a plurality of tasks based on the cooperation-partner plan, time slot, allocation type, and the number of tasks specified by the user. To be more specific, the resource operation planning assist apparatus 1000 allocates resources to a specified number of tasks or releases the resources from the tasks in the specified time slot. In this event, a cooperation-partner task connected to the task receiving the change is extracted from the specified cooperation-partner plan, and is connected to the given plan task.

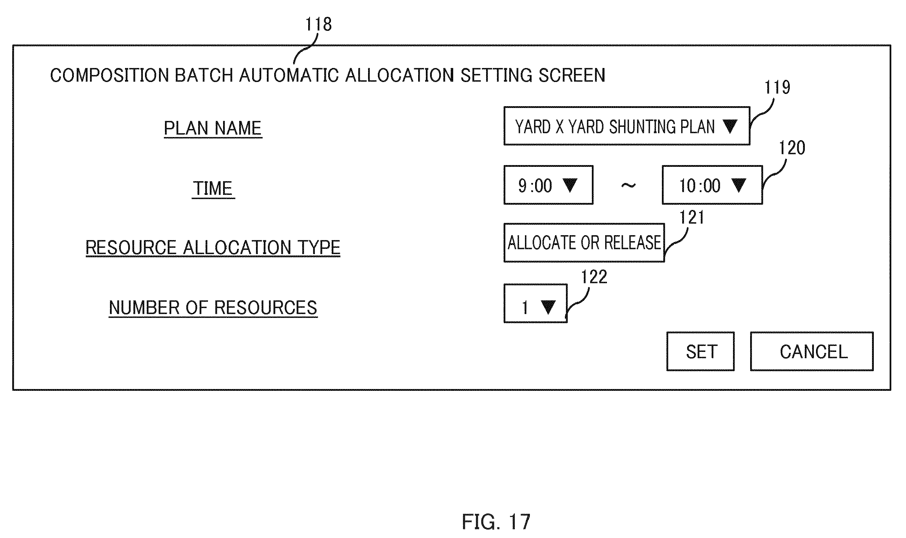

Fig. 17 shows a composition batch automatic allocation setting screen 118 that is a reception screen for performing the "batch resource allocation". The resource operation planning assist apparatus 1000 automatically generates restriction information for collectively setting resources that can be allocated to an appropriate task based on the respective information, such as the plan name, time, resource allocation type, and the number of resources, specified by the user on the screen 118,. The resource operation planning assist apparatus 1000 stores the generated restriction information in the task connection information 4 and the restriction information 6 in the storage device 1100 through the same procedure as that shown in Fig. 14.

The composition batch automatic allocation setting screen 118 includes plan name 119, time 120, resource allocation type 121, and the number of resources 122. Among these, the plan name 119 represents a cooperation-partner plan identifier cooperating with the given plan, and is used to draw an allocable composition (resource) from the information of the corresponding cooperation-partner plan. The time 120 represents a target time slot for the batch resource allocation, and is used to draw a target train (task) from the given plan. The resource allocation type 121 is used to select whether to allocate the composition (resource) to the train (task) or to release the already allocated composition from the train when performing the batch resource allocation. The number of resources 122 represents the number of compositions (resources) to be changed when performing the batch resource allocation.

Next, description is given of a restriction information generation flow in the "batch resource allocation" . In this case, the resource operation planning assist apparatus 1000 receives an information input from the user, and acquires a list of task information in the time slot set in the time 120 from the plan information 1 in the storage device 1100.

Then, when the resource allocation type 121 is "allocation", the resource operation planning assist apparatus 1000 acquires cooperation-partner plan information by referring to the plan information 1, the inter-plan cooperation information 2, and the task connection information 4 in the storage device 1100 based on the rules indicated by the condition type 37 "cooperatable condition" in the cooperation definition information 3, and also acquires a resource information list that can be allocated in the specified time slot.

Moreover, the resource operation planning assist apparatus 1000 transmits the given plan task identifier, the restriction of the task start and end times of the given plan, and the restriction of the number of resources 122 to the other apparatus having the yard shunting plan as a plan target, for the acquired task information list and resource information list. When the other apparatus performs re-creation, the resource operation planning assist apparatus 1000 acquires respective cooperating tasks and a list of resources connected thereto (equivalent to the output cooperation task information) as a result of the re-creation. The resource operation planning assist apparatus 1000 stores a list of the cooperating tasks and resources connected to each other in the task connection information 4 and the restriction information 6 in the storage device 1100.

On the other hand, when the resource allocation type 121 is "release", the resource operation planning assist apparatus 1000 acquires information of the cooperation-partner plan by referring to the plan information 1, the inter-plan cooperation information 2, and the task connection information 4 in the storage device 1100, and also acquires a resource information list connected to the acquired task information list. Next, the resource operation planning assist apparatus 1000 transmits restrictions to the cooperating other apparatus in the same manner as the above, for the acquired task information list and the resource information list connected thereto. When obtaining each cooperating task and a list of resources connected thereto as an output result from the other apparatus, the resource operation planning assist apparatus 1000 updates the task connection information 4 and the restriction information 6 in the storage device 1100 based on those obtained.

Although the best mode for carrying out the present invention, and the like have been specifically described above, the present invention is not limited thereto but various changes can be made without departing from the scope of the invention.

This embodiment thus configured makes it possible to assist in re-creating a feasible given plan while avoiding a conflict with another cooperating plan in response to an event of a change in the given plan.

At least the following will become apparent from the description of the present specification. Specifically, in the resource operation planning assist apparatus according to this embodiment, the arithmetic device may further execute processing of determining whether or not there is an influence on a resource or a task specified in the other plan cooperating with the given plan, when the restriction information is applied to the plan information of the given plan, based on at least the plan information of the other plan and the cooperation task information, and transmitting the restriction information to a predetermined apparatus configured to manage the other plan when it is determined that there is an influence on the other plan.

Thus, under the influence of a change in the given plan described above, in the other plan cooperating therewith, a manager or the like of the other plan can previously recognize an event such as a change in arrival and departure times of a transportation device, for example, within the allowable range (cooperation with the other tasks and resources in the other plan can be executed as initially planned) even though the conditions for inter-plan cooperation are met. For example, when the manager or the like of the other plan changes the other plan, the operation can be performed based on the change in the given plan described above. Accordingly, the cooperation between the given plan and the other plan can meet the conditions. Thus, it is made possible to assist in re-creating a feasible given plan while avoiding a conflict with another cooperating plan in response to an event of a change in the given plan.

Moreover, in the resource operation planning assist apparatus according to this embodiment, the arithmetic device may further execute processing of specifying an influence on the given plan by using a predetermined algorithm when allocating the alternative resource candidate to the task instead of the current resource or when allocating the resource to the alternative task candidate instead of the current task, in specifying the alternative resource candidate or alternative task candidate, and outputting information about the specified influence to the display device together with information of the alternative resource candidate or the alternative task candidate.

Accordingly, as for the influence when the other alternative task or resource is allocated to the task or resource to be changed in the given plan, the manager or the like of the given plan can perform an operation of selecting the least affected one after recognizing the level of an event such as a delay in the arrival and departure times of the transportation device (within the allowable range; cooperation with the other tasks and resources in the given plan can be executed as initially planned), for example. Thus, it is made possible to assist in re-creating a feasible given plan while minimizing the influence of a change in the given plan on the cooperation with the other plan and avoiding a conflict with another cooperating plan in response to an event of a change in the given plan.

In the resource operation planning assist method according to this embodiment, when the restriction information is applied to the plan information of the given plan, the information processor may determine whether or not there is an influence on a resource or a task specified in the other plan cooperating with the given plan, based on at least the plan information of the other plan and the cooperation task information, and further execute processing of transmitting the restriction information to a predetermined apparatus configured to manage the other plan when it is determined that there is an influence on the other plan.

In the resource operation planning assist method according to this embodiment, the information processor may specify the influence on the given plan by using a predetermined algorithm when allocating the alternative resource candidate to the task instead of the current resource or when allocating the resource to the alternative task candidate instead of the current task, in specification of the alternative resource candidate or alternative task candidate, and further execute processing of outputting information about the specified influence to the display device together with information of the alternative resource candidate or the alternative task candidate.

## Claims

1. A resource operation planning assist apparatus (1000) comprising:
a storage device (1100) configured to store cooperation definition information (3) defining a cooperation condition between plans sharing a resource used to implement the plans and plan information (1) indicating details of the respective plans; and
an arithmetic device (1202) configured to execute
processing of reading the plan information (1) of a given one of the plans requiring a predetermined change among the plans and the plan information (1) of another one of the plans other than the given plan, from the storage device (1100), checking information about a resource and each task thereof used in each of the plans indicated by the plan information (1) with the cooperation condition defined in the cooperation definition information (3), and specifying a pair of tasks in the given plan and the other plan, which meet the cooperation condition, as cooperating tasks, and
processing of, upon receipt of an instruction to change a certain task or a certain resource in the given plan through an input device (1201), specifying each alternative resource candidate which is allocable to the certain task instead of the current resource or an alternative task candidate to which the certain resource is allocable instead of the current task, by using a predetermined algorithm based on the plan information (1), the cooperation definition information (3), and respective information of the cooperating tasks, receiving information about an alternative resource or an alternative task specified by a user from the alternative resource candidates or the alternative task candidates, as restriction information (6), through the input device (1201), re-creating the given plan by using a predetermined algorithm under a condition that the restriction information (6) is applied to the plan information (1) of the given plan, and outputting the re-created given plan to a predetermined apparatus.

2. The resource operation planning assist apparatus (1000) according to claim 1, wherein
the arithmetic device (1202) further executes processing of determining whether or not there is an influence on a resource or a task specified in the other plan cooperating with the given plan, when the restriction information (6) is applied to the plan information (1) of the given plan, based on at least the plan information (1) of the other plan and the cooperation task information, and transmitting the restriction information (6) to a predetermined apparatus managing the other plan when the arithmetic device (1202) determines that there is an influence on the other plan.

3. The resource operation planning assist apparatus (1000) according to claim 1, wherein
the arithmetic device (1202) further executes processing of, in specifying each alternative resource candidate or alternative task candidate, specifying an influence on the given plan by using a predetermined algorithm, the influence being caused when the alternative resource candidate is allocated to the task instead of the current resource or when the resource is allocated to the alternative task candidate instead of the current task, and outputting information about the specified influence to a display device (1200) together with information of the alternative resource candidate or the alternative task candidate.

4. A resource operation planning assist method to be implemented by an information processor (1000) including a storage device (1100) configured to store cooperation definition information (3) defining a cooperation condition between plans sharing a resource used to implement the plans and plan information (1) indicating details of the respective plans, the method causing the information processor (1000) to execute:
processing of reading the plan information (1) of a given one of the plans requiring a predetermined change among the plans and the plan information (1) of another one of the plans other than the given plan, from the storage device (1100), checking information about a resource and each task thereof used in each of the plans indicated by the plan information (1) with the cooperation condition defined in the cooperation definition information (3), and specifying a pair of tasks in the given plan and the other plan, which meet the cooperation condition, as cooperating tasks, and
processing of, upon receipt of an instruction to change a certain task or a certain resource in the given plan through an input device (1201), specifying each alternative resource candidate which is allocable to the certain task instead of the current resource or an alternative task candidate to which the certain resource is allocable instead of the current task, by using a predetermined algorithm based on the plan information (1), the cooperation definition information (3), and respective information of the cooperating tasks, receiving information about an alternative resource or an alternative task specified by a user from the alternative resource candidates or the alternative task candidates, as restriction information (6), through the input device (1201), re-creating the given plan by using a predetermined algorithm under a condition that the restriction information (6) is applied to the plan information (1) of the given plan, and outputting the re-created given plan to a predetermined apparatus.

5. The resource operation planning assist method according to claim 4, wherein
the information processor (1000) further executes processing of determining whether or not there is an influence on a resource or a task specified in the other plan cooperating with the given plan, when the restriction information (6) is applied to the plan information (1) of the given plan, based on at least the plan information (1) of the other plan and the cooperation task information, and transmitting the restriction information (6) to a predetermined apparatus managing the other plan, when the information processor (1000) determines that there is an influence on the other plan.

6. The resource operation planning assist method according to claim 4, wherein
the information processor (1000) further executes processing of, in specifying each alternative resource candidate or alternative task candidate, specifying an influence on the given plan by using a predetermined algorithm, the influence being caused when the alternative resource candidate is allocated to the task instead of the current resource or when the resource is allocated to the alternative task candidate instead of the current task, and outputting information about the specified influence to a display device (1200) together with information of the alternative resource candidate or the alternative task candidate.

7. A computer program adapted to perform all the steps of the method claim 4 when the program is run on a computer.

8. A computer program as claimed in claim 7 embodied on a computer readable storage unit.
